# EUROPÄISCHE PATENTSCHRIFT

(11) **EP 2 878 466 B1**
(45) Veröffentlichungstag und Bekanntmachung des Hinweises auf die Patenterteilung: **11.04.2018**
(21) Anmeldenummer: 13194856.4
(22) Anmeldetag: 28.11.2013
(51) Int. Cl.: B60H 1/00

(54) **Klimatisierungsanlage für ein Fahrzeug**
Air-conditioning system for a vehicle
Installation de climatisation pour un véhicule

(43) Veröffentlichungstag der Anmeldung: 03.06.2015
(73) Patentinhaber: Mahle Behr France Rouffach S.A.S., 68250 Rouffach (FR)
(72) Erfinder: Klein, Henri, 68400 Riedisheim (FR); Fleith, Emmanuel, 68320 Holtzwihr (FR)
(74) Vertreter: BRP Renaud & Partner mbB Rechtsanwälte Patentanwälte Steuerberater

(56) Entgegenhaltungen:
- EP-A1- 2 402 183
- DE-A1-102009 024 255
- FR-A1- 2 910 384
- JP-A- 2007 168 735
- US-A1- 2012 214 394

## Beschreibung

Die vorliegende Erfindung betrifft eine Klimatisierungsanlage zum Klimatisieren eines Innenraums eines Fahrzeugs, insbesondere eines Personenkraftwagens, mit den Merkmalen des Oberbegriffs des Anspruchs 1. Die Erfindung betrifft außerdem eine Steuereinrichtung für eine derartige Klimatisierungsanlage sowie eine Steuerklappe für eine derartige Klimatisierungsanlage bzw. für eine solche Steuereinrichtung. Außerdem betrifft die vorliegende Erfindung eine Verwendung einer Steuerklappe oder einer Steuereinrichtung in einer derartigen Klimatisierungsanlage.

Eine Klimatisierungsanlage eines Fahrzeugs umfasst typischerweise ein Gebläse zum Antreiben von Luft. Die zu klimatisierende Luft kann dabei aus einer Umgebung des Fahrzeugs angesaugt werden, wobei es sich um sogenannte "Frischluft" handelt. Ebenso kann die zu klimatisierende Luft aus dem Innenraum des Fahrzeugs angesaugt werden, wobei es sich um sogenannte "Umluft" handelt. Um zwischen einer Ansaugung von Frischluft und einer Ansaugung von Umluft umschalten zu können, kann die Klimatisierungsanlage mit einer Steuereinrichtung ausgestattet sein, die einen Umlufteinlass zum Ansaugen von Umluft aus dem Innenraum, einen Frischlufteinlass zum Ansaugen von Frischluft aus der Umgebung des Fahrzeugs und einen Luftauslass zum Weiterleiten der angesaugten Umluft bzw. Frischluft zum Gebläse aufweist. Des Weiteren kann eine derartige Steuereinrichtung mit einer Steuerklappe ausgestattet sein, die zwischen einer Umluftstellung, in der sie einen vom Frischlufteinlass zum Luftauslass führenden Frischluftpfad versperrt, also schließt, und einen vom Umlufteinlass zum Luftauslass führenden Umluftpfad freigibt, also öffnet, und einer Frischluftstellung verstellbar ist, in der sie den Umluftpfad schließt und den Frischluftpfad öffnet.

Aus Komfortgründen ist es häufig erwünscht, dass auch für den Fall, dass die Steuerklappe in die Frischluftstellung verstellt ist, ein gewisser Anteil an Umluft angesaugt wird, so dass letztlich auch in der Frischluftstellung ein Gemisch aus Frischluft und Umluft dem Gebläse zugeführt wird.

Um dies zu realisieren ist grundsätzlich denkbar, die Steuerklappe so auszugestalten, dass sie in der Frischluftstellung den Umluftpfad nicht vollständig schließen kann, sodass also eine gewisse Leckage in Kauf genommen wird. Problematisch ist dabei, dass abhängig von den Druckverhältnissen in der Frischluftstellung Frischluft durch die undichte Steuerklappe durch den Umlufteinlass in den Fahrzeuginnenraum austreten kann, was unerwünscht ist. Um eine derartige Durchströmung des Umlufteinlasses zu vermeiden, ist es grundsätzlich möglich, stromauf des Umlufteinlasses oder zwischen dem Umlufteinlass und der Steuerklappe ein Rückschlagsperrventil anzuordnen, das eine Durchströmung in einer zum Luftauslass führenden Richtung zulässt und eine Durchströmung in einer zum Umlufteinlass führenden Gegenrichtung sperrt. Die Integration eines derartigen Rückschlagsperrventils benötigt jedoch vergleichsweise viel Bauraum.

Aus der DE 10 2010 042 163 A1 ist ein Rückschlagsperrventil bekannt, das grundsätzlich bei einer derartigen Steuereinrichtung verwendet werden kann, um es dort beispielsweise stromauf des Umlufteinlasses anzuordnen.

Aus der DE 699 19826T2 ist eine Klimatisierungsanlage bekannt, die eine Mischeinrichtung aufweist, die einen Kaltlufteinlass für Kaltluft, einen Warmlufteinlass für Warmluft und einen Luftauslass zum Weiterleiten der zugeführten Kaltluft und/oder Warmluft umfasst. Ferner ist diese Mischeinrichtung mit einer Mischklappe ausgestattet, in die eine Bypasskontur eingearbeitet ist, wobei diese Bypasskontur nur in Zwischenstellungen der Mischklappe geöffnet ist, um einen zusätzlichen Kaltluftstrom zu ermöglichen, wodurch die Vermischung mit dem Warmluftstrom verbessert werden soll. Aus der JP 2007-168735A ist eine Klimatisierungsanlage mit den Merkmalen des Oberbegriffs des unabhängigen Anspruchs 1 offenbar. Die vorliegende Erfindung beschäftigt sich mit dem Problem, für eine Klimatisierungsanlage der eingangs genannten Art bzw. für eine zugehörige Steuereinrichtung bzw. für eine zugehörige Steuerklappe eine verbesserte oder zumindest eine andere Ausführungsform anzugeben, die sich insbesondere durch eine kompakte und/oder preiswerte Bauform auszeichnet.

Dieses Problem wird erfindungsgemäß durch den Gegenstand des unabhängigen Anspruchs gelöst. Vorteilhafte Ausführungsformen sind Gegenstand der abhängigen Ansprüche.

Die Erfindung beruht auf dem allgemeinen Gedanken, in die Steuerklappe zumindest ein Rückschlagsperrventil zu integrieren, derart, dass die Steuerklappe auch in ihrer Frischluftstellung entlang des Umluftpfads in Richtung Luftauslass durchströmbar ist. Somit kann auch in der Frischluftstellung, in welcher die Steuerklappe an sich den Umluftpfad sperrt, ein gewisser Anteil an Umluft der Frischluft zugemischt werden, wenn an einer dem Luftauslass zugewandten Innenseite der Steuerklappe ein entsprechender Unterdruck herrscht, der eine Ansaugung von Umluft durch das Rückschlagsperrventil hindurch ermöglicht. Durch die Integration des Rückschlagsperrventils in die Steuerklappe wird für die Realisierung der Rückschlagsperrfunktion kein zusätzlicher Bauraum benötigt, sodass die erfindungsgemäße Steuereinrichtung bzw. die erfindungsgemäße Klimatisierungsanlage besonders kompakt realisierbar ist. Des Weiteren reduziert sich durch die Integration des Rückschlagsperrventils in die Steuerklappe der Herstellungsaufwand, wodurch auch die Herstellungskosten reduziert werden können.

Das Rückschlagsperrventil ist in der Steuerklappe so angeordnet, dass es in der Frischluftstellung eine Umluftströmung vom Umlufteinlass durch die Steuerklappe zum Luftauslass zulässt, während es in der Frischluftstellung eine Umluftströmung in der Gegenrichtung, also in Richtung Umlufteinlass sperrt. Erfindungsgemäß weist das jeweilige Rückschlagsperrventil ein Ventilglied auf, das verstellbar beziehungsweise beweglich an der Steuerklappe angeordnet ist und mit einer in der Steuerklappe ausgebildeten Durchlassöffnung zusammenwirkt, um diese in der Durchströmungsrichtung zu öffnen und in der Gegenrichtung zu sperren. Hierdurch ergibt sich ein besonders einfacher Aufbau zur Realisierung des Rückschlagsperrventils. Die Durchlassöffnung kann einen als Ventilsitz ausgestalteten Öffnungsrand besitzen, wodurch ein dichtes Versperren der Durchlassöffnung in der Gegenrichtung vereinfacht wird. Die vom jeweiligen Ventilglied zu steuernde Durchlassöffnung besitzt einen deutlich kleineren durchströmbaren Querschnitt als der Umlufteinlass, wodurch der Aufwand zur Realisierung des Rückschlagsperrventils reduziert ist. Erfindungsgemäß ist das Ventilglied zumindest bereichsweise, also teilweise oder vollständig, elastisch ausgestaltet und an einer dem Luftauslass zugewandten Innenseite der Steuerklappe angeordnet. Beispielsweise kann es sich beim Ventilglied um ein elastisches Kunststoffteil handeln, das biegeweich ist bzw. eine geeignete geringe Biegesteifigkeit besitzt.

Bei einer anderen Ausführungsform kann das Ventilglied in einem stationären Bereich an der Steuerklappe befestigt sein, während es in einem elastischen mobilen Bereich relativ zur Steuerklappe beweglich bzw. verstellbar ist. Der stationäre Bereich kann dabei ebenfalls elastisch oder aber steif ausgestaltet sein. Hierdurch besitzt das Rückschlagsperrventil einen extrem einfachen und somit besonders preiswert realisierbaren Aufbau.

Bei einer anderen Ausführungsform kann das jeweilige Rückschlagsperrventil in seine Schließstellung vorgespannt bzw. druckgesteuert sein, so dass es in der Frischluftstellung der Steuerklappe erst ab einem vorbestimmten Unterdruck im Frischluftpfad relativ zum Umlufteinlass öffnet. Auf diese Weise wird sichergestellt, dass das Rückschlagsperrventil in der Frischluftstellung erst dann eine Zumischung von Umluft ermöglicht, wenn hierfür geeignete Druckverhältnisse und stabile Strömungsverhältnisse herrschen.

Bei einer anderen Ausführungsform kann die Steuerklappe wannenförmig ausgestaltet sein, wobei eine konkave Innenseite der Steuerklappe dem Luftauslass zugewandt ist. Zweckmäßig besitzt die wannenförmige Steuerklappe eine konvexe Außenseite, die in der Frischluftstellung dem Umlufteinlass zugewandt ist und in der Umluftstellung dem Frischlufteinlass zugewandt ist. Bei einer derartigen, wannenförmigen Steuerklappe wird die Kontur der Steuerklappe geschickt zur Strömungsumlenkung genutzt, wodurch die Steuereinrichtung insgesamt einen vergleichsweise geringen Durchströmungswiderstand besitzt.

Bei einer anderen Ausführungsform kann die Steuereinrichtung ein Steuergehäuse aufweisen, das den Umlufteinlass, den Frischlufteinlass, und den Luftauslass aufweist, wobei die Steuerklappe in diesem Steuergehäuse um eine Schwenkachse verschwenkbar angeordnet ist. In Verbindung mit einem derartigen Steuergehäuse, das separat von einem übrigen Gehäuse der Klimatisierungsanlage ausgebildet sein kann, lässt sich die Steuereinrichtung als vormontierbare Einheit realisieren, die im vormontierten Zustand in die Klimatisierungsanlage eingebaut werden kann. Hierdurch lässt sich die Montage insgesamt vereinfachen. Die Schwenkachse kann innerhalb des Steuergehäuses relativ zentral angeordnet sein. Insbesondere kann sich die Schwenkachse parallel zu einer Luftaustrittsebene erstrecken, in welcher der Luftauslass liegt, und/oder parallel zu einer Umlufteintrittsebene erstrecken, in der der Umlufteinlass liegt, und/oder parallel zu einer Frischlufteintrittsebene erstrecken, in der der Frischlufteinlass liegt.

Gemäß einer Weiterbildung kann die Steuerklappe Dichtkonturen aufweisen, die in der Frischluftstellung und in der Umluftstellung mit dazu komplementären Gegendichtkonturen zusammenwirken, die am Steuergehäuse ausgebildet sind. Zum einen kann die Steuerklappe mithilfe der Dichtkonturen und der Gegendichtkonturen in der Frischluftstellung den Umluftpfad dicht verschließen und in der Umluftstellung den Frischluftpfad dicht verschließen. Zum anderen kann mithilfe derartiger Dichtkonturen und Gegendichtkonturen eine verbesserte Positionierung der Steuerklappe in der jeweiligen Stellung erreicht werden, wodurch eine Geräuschentwicklung aufgrund von Relativbewegungen zwischen der Steuerklappe und dem Steuergehäuse vermieden bzw. reduziert werden kann.

Die hier vorgestellte Klimatisierungsanlage kann außerdem in üblicher Weise mit wenigstens einer Heizeinrichtung, zum Beispiel in Form eines Wärmeübertragers, und mit wenigstens einer Kühleinrichtung, zum Beispiel in Form eines Wärmeübertragers, sowie mit wenigstens einem Luftfilter ausgestattet sein. Ebenso kann die Klimatisierungsanlage mit einer Mischeinrichtung ausgestattet sein, um gekühlte Kaltluft mit erwärmter Warmluft mischen zu können.

Eine erfindungsgemäße Steuereinrichtung umfasst den Umlufteinlass, den Frischlufteinlass, den Luftauslass und die Steuerklappe mit integriertem Rückschlagsperrventil. Bevorzugt umfasst die Steuereinrichtung auch das vorstehend genannte Steuergehäuse, um die Steuereinrichtung zu einer vormontierbaren Einheit zu konfigurieren.

Eine erfindungsgemäße Steuerklappe ist mit wenigstens einem daran ausgebildeten Rückschlagsperrventil ausgestattet, das einer entsprechenden Durchlassöffnung der Steuerklappe zugeordnet ist, so dass diese Durchlassöffnung der Steuerklappe in der einen Richtung durchströmbar ist und in der Gegenrichtung nicht.

Bei einer erfindungsgemäßen Verwendung der Steuereinrichtung kommt diese in einer Klimatisierungsanlage der vorstehend beschriebenen Art zum Einsatz. Bei einer erfindungsgemäßen Verwendung der Steuerklappe kommt dieses in einer Steuereinrichtung der vorstehend beschriebenen Art bzw. in einer Klimatisierungsanlage der vorstehend beschriebenen Art zum Einsatz.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Komponenten beziehen.

Es zeigen, jeweils schematisch,
- Fig. 1: eine isometrische Ansicht einer Klimatisierungsanlage,
- Fig. 2: eine isometrische Ansicht einer Steuereinrichtung der Klimatisierungsanlage,
- Fig. 3: eine isometrische Schnittansicht der Steuereinrichtung mit einer Steuerklappe in ihrer Frischluftstellung,
- Fig. 4: eine isometrische Schnittansicht der Steuereinrichtung mit der Steuerklappe in ihrer Umluftstellung,
- Fig. 5: eine isometrische Ansicht der Steuerklappe.

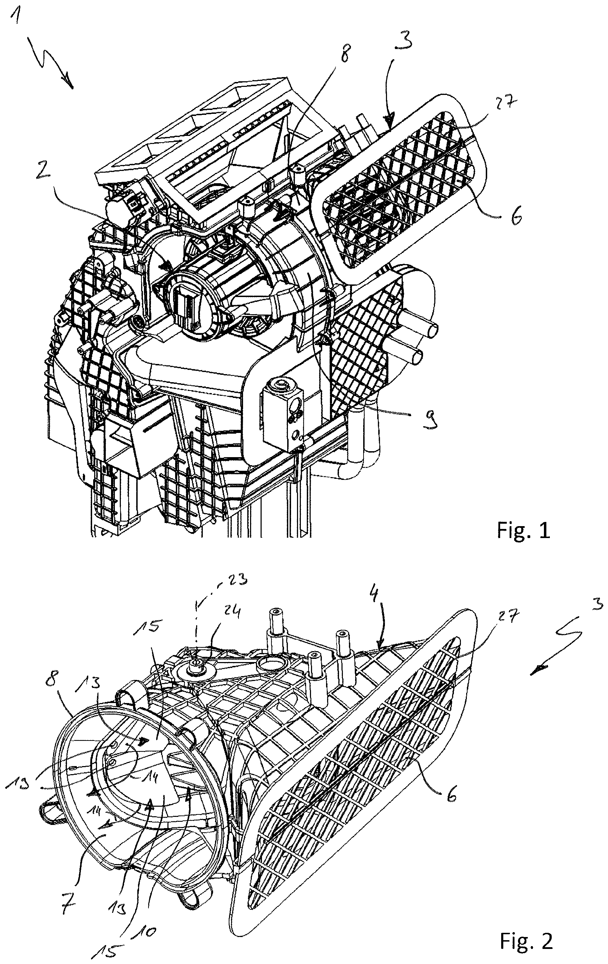

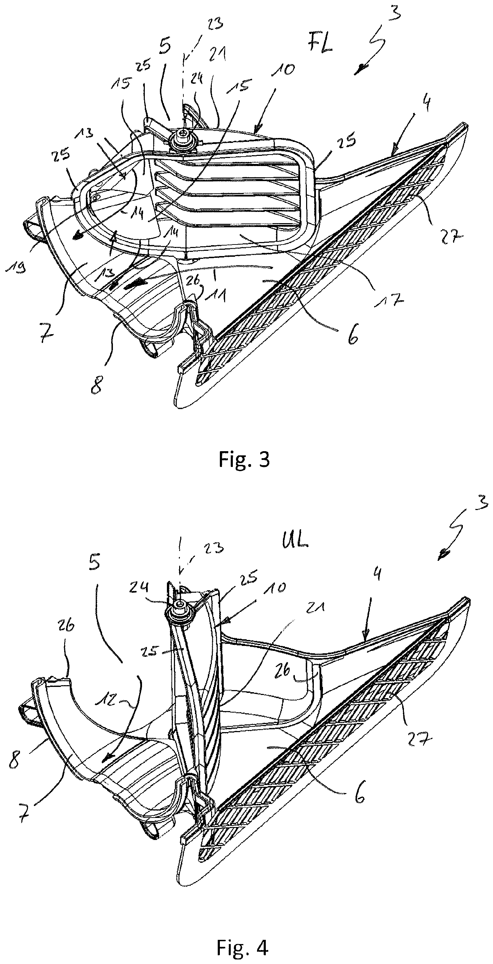

Entsprechend Fig. 1 kann eine Klimatisierungsanlage 1 neben einer Vielzahl anderer, herkömmlicher Komponenten zumindest ein Gebläse 2 zum Antreiben von Luft aufweisen. Ferner umfasst die Klimatisierungsanlage 1 eine Steuereinrichtung 3, mit deren Hilfe zwischen einem Umluftbetrieb und einem Frischluftbetrieb umgeschaltet werden kann.
Entsprechend den Figuren 2 bis 4 kann diese Steuereinrichtung 3 mit einem Steuergehäuse 4 ausgestattet sein, mit dessen Hilfe die Steuereinrichtung 3 eine vormontierbare Einheit bildet, die im vormontierten Zustand in die übrige Klimatisierungsanlage 1 eingebaut werden kann. Jedenfalls umfasst die Steuereinrichtung 3 einen in den Figuren 3 und 4 erkennbaren Umlufteinlass 5, einen in den Figuren 1 bis 4 erkennbaren Frischluftanlass 6 und einen in den Figuren 2 bis 4 erkennbaren Luftauslass 7. Der Umlufteinlass 5 dient zum Ansaugen von Umluft aus einem hier nicht erkennbaren Innenraum eines Fahrzeugs, der mithilfe der Klimatisierungsanlage 1 klimatisiert werden soll. Der Frischlufteinlass 6 dient zum Ansaugen von Frischluft aus einer Umgebung des Fahrzeugs. Der Luftauslass 7 dient zum Weiterleiten der angesaugten Umluft bzw. Frischluft zum Gebläse 2. In gezeigtem Beispiel sind der Umlufteinlass 5, der Frischlufteinlass 6 und der Luftauslass 7 am Steuergehäuse 4 ausgebildet. Der Luftauslass 7 ist dabei von einem Flansch 8 des Steuergehäuses 4 eingefasst, über den das Steuergehäuse 4 und somit die Steuereinrichtung 3 an einem Gegenflansch 9 der Klimatisierungsanlage 1 befestigt werden kann, der im Beispiel am Einlass beziehungsweise an einer Saugseite des Gebläses 2 angeordnet ist.

Die Steuereinrichtung 3 enthält außerdem eine in den Figuren 2 bis 5 erkennbare Steuerklappe 10, die zwischen einer in Figur 4 wiedergegebenen Umluftstellung UL und einer in den Figuren 2 und 3 wiedergegebenen Frischluftstellung FL verstellbar ist. In der Umluftstellung UL gemäß Figur 4 verschließt die Steuerklappe 10 einen in Figur 3 durch einen Pfeil angedeuteten Frischluftpfad 11, der vom Frischlufteinlass 6 zum Luftauslass 7 führt. Gleichzeitig gibt die Steuerklappe 10 in ihrer Umluftstellung UL einen in Figur 4 durch einen Pfeil angedeuteten Umluftpfad 12 frei, der vom Umlufteinlass 5 zum Luftauslass 7 führt. Ist die Steuerklappe 10 dagegen in ihre Frischluftstellung FL gemäß Figur 3 verstellt, schließt sie den Umluftpfad 12 und öffnet den Frischluftpfad 11. Sowohl bei der Umluftstellung UL, als auch bei der Frischluftstellung FL handelt es sich um Endstellungen der Steuerklappe 10, die zweckmäßig durch Anschläge definiert sind. Bei einer einfachen Ausführungsform sind für die Steuerklappe 10 nur diese beiden Endstellungen, also die Umluftstellung UL und die Frischluftstellung FL einstellbar. Bei einer komfortablen Ausführungsform ist jedoch zumindest eine Zwischenstellung einstellbar. Vorzugsweise sind jedoch mehrere Zwischenstellungen einstellbar. Insbesondere ist eine stufenlose Verstellbarkeit vorgesehen, so dass quasi beliebig viele Zwischenstellungen einstellbar sind.

Die Steuerklappe 10 ist mit wenigstens einem Rückschlagsperrventil 13 ausgestattet. Bei der hier gezeigten, bevorzugten Ausführungsform ist die Steuerklappe 10 mit zwei derartigen Rückschlagsperrventilen 13 ausgestattet, die hier spiegelbildlich ausgestaltet sind. Es ist klar, dass bei einer anderen Ausführungsform die Steuerklappe 10 auch mit nur einem einzigen Rückschlagsperrventil 13 ausgestattet sein kann. Ferner können grundsätzlich auch mehr als zwei Rückschlagsperrventile 13 vorgesehen sein.

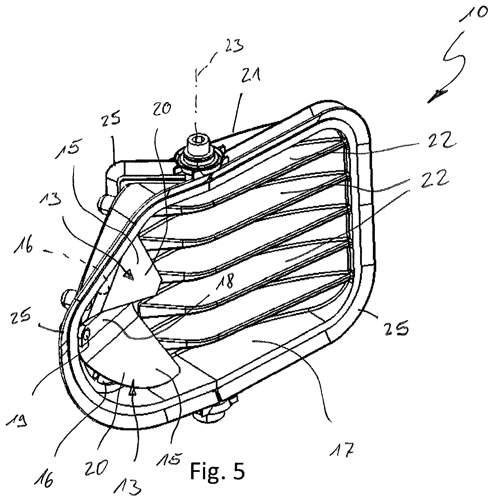

Das jeweilige Rückschlagsperrventil 13 ist so ausgestaltet und an der Steuerklappe 10 so angeordnet, dass es in der Frischluftstellung FL gemäß der Figuren 2 und 3 eine durch Pfeile angedeutete Umluftströmung 14 von dem an sich durch die Steuerklappe 10 versperrten Umlufteinlass 5 durch die Steuerklappe 10 hindurch zum Luftauslass 7 ermöglicht. Im Unterschied dazu sperrt es Strömungen in der Gegenrichtung, also vom Inneren des Steuergehäuses 4 zum Umlufteinlass 5 orientierte Strömungen. Das jeweilige Rückschlagsperrventil 13 besitzt ein Ventilglied 15, das an der Steuerklappe 10 verstellbar und/oder beweglich angeordnet ist. Dabei wirkt das jeweilige Ventilglied 15 mit einer in der Steuerklappe 10 ausgebildeten, in den Figuren 2 bis 4 vollständig verdeckten und in Figur 5 weitgehend verdeckten Durchlassöffnung 16 zusammen. Das Zusammenwirken des jeweiligen Ventilglieds 15 mit der zugehörigen Durchlassöffnung 16 erfolgt derart, dass das Ventilglied 15 die zugehörige Durchlassöffnung 16 in der Durchströmungsrichtung öffnet und in der Gegenrichtung sperrt.

Bei den hier gezeigten Beispielen ist das Rückschlagsperrventil 13 konstruktiv besonders einfach ausgeführt, wodurch es entsprechend preiswert realisierbar ist. Das Ventilglied 15 ist zweckmäßig durch einen biegeweichen und somit elastischen Körper gebildet, vorzugsweise aus Kunststoff. Das insoweit elastische Ventilglied 15 ist an einer dem Luftauslass 7 zugewandten Innenseite 17 der Steuerklappe 10 angeordnet. Das jeweilige Ventilglied 15 ist an einem stationären Bereich 18 an der Steuerklappe 10 befestigt. In den Figuren 2, 3 und 5 sind entsprechende Befestigungsstellen 19 erkennbar. Grundsätzlich sind beliebige Befestigungstechniken denkbar. Beispielsweise kann das jeweilige Ventilglied 15 mit der Steuerklappe 10 verschweißt oder verklebt sein. Ebenso sind Schraub- und Nietverbindungen denkbar. Bevorzugt ist ein Punkschweißen des Ventilglieds 15 aus Kunststoff an der Steuerklappe 10, die vorzugsweise ebenfalls aus Kunststoff besteht. Das jeweilige Ventilglied 15 ist dann in einem mobilen Bereich 20 relativ zur Steuerklappe 10 beweglich beziehungsweise verstellbar. Zumindest im mobilen Bereich 20 ist das Ventilglied somit elastisch. Zweckmäßig ist auch der stationäre Bereich 18 elastisch; dies ist jedoch nicht zwingend.

Das jeweilige Rückschlagsperrventil 13 ist vorzugsweise druckgesteuert bzw. in seine Schließstellung vorgespannt, so dass es in der Frischluftstellung FL der Steuerklappe 10 grundsätzlich geschlossen ist, also die jeweilige Durchlassöffnung 16 mit der Steuerklappe 10 verschließt. Erst bei einem vorbestimmten Unterdruck im Frischluftpfad 11 relativ zum Umlufteinlass 5 öffnet das Rückschlagsperrventil 13, um die vorgenannte Umluftströmung 14 zu ermöglichen.

Beim hier gezeigten Beispiel ist die Steuerklappe 10 wannenförmig ausgestaltet, wobei die Innenseite 17 konkav geformt ist, während eine von der Innenseite 17 abgewandte Außenseite 21 der Steuerklappe 10 konvex geformt ist. An der Innenseite 17 sind außerdem Strömungsleitrippen 22 angeformt, die parallel zueinander verlaufen und die eine Strömungsausrichtung sowohl in der Umluftstellung UL als auch in der Frischluftstellung FL ermöglichen. Gleichzeitig führen die Strömungsleitrippen 22 zur einer intensiven Aussteifung der Steuerklappe 10.

Die Steuerklappe 10 ist im Steuergehäuse 4 um eine Schwenkachse 23 verschwenkbar gelagert. Dabei kann ein Lagerzapfen 24 der Steuerklappe 10 so dimensioniert sein, dass er gemäß Figur 2 das Steuergehäuse 4 durchsetzt und an der Außenseite des Steuergehäuses 4 eine Kopplungsstelle für einen hier nicht gezeigten Stellantrieb bildet, mit dessen Hilfe die Steuerklappe 10 angetrieben werden kann, um sie zwischen ihrer Umluftstellung UL und ihrer Frischluftstellung FL zu verschwenken. Die Dichtkonturen 25 bilden mit den zugehörigen Gegendichtkonturen 26 die vorstehend genannten Anschläge zum Definieren der Endstellungen.

Wie sich den Figuren 3 bis 5 entnehmen lässt, ist die Steuerklappe 10 zweckmäßig mit Dichtkonturen 25 ausgestattet, die in der Frischluftstellung FL und in der Umluftstellung UL mit Gegendichtkonturen 26 zusammenwirken, die in den Figuren 3 und 4 dargestellt sind und die am Steuergehäuse 4 ausgebildet sind. Auf diese Weise können unerwünschte Leckageströmungen vermieden werden.

Das Steuergehäuse 4 ist hier außerdem im Bereich des Frischlufteinlasses 6 mit einem Einlassgitter 27 ausgestattet, an dem sich beispielsweise ein Frischluftfilter abstützen kann.

## Patentansprüche

1. Klimatisierungsanlage zum Klimatisieren eines Innenraums eines Fahrzeugs, insbesondere eines Personenkraftwagens,
- mit einem Gebläse (2) zum Antreiben von Luft,
- mit einer Steuereinrichtung (3), die einen Umlufteinlass (5) zum Ansaugen von Umluft aus dem Innenraum, einen Frischlufteinlass (6) zum Ansaugen von Frischluft aus einer Umgebung des Fahrzeugs und einen Luftauslass (7) zum Weiterleiten der angesaugten Umluft und/oder Frischluft zum Gebläse (2) aufweist,
- wobei die Steuereinrichtung (3) eine Steuerklappe (10) aufweist, die zwischen einer Umluftstellung (UL), in der sie einen vom Frischlufteinlass (6) zum Luftauslass (7) führenden Frischluftpfad (11) schließt und einen vom Umlufteinlass (5) zum Luftauslass (7) führenden Umluftpfad (12) öffnet, und einer Frischluftstellung (FL) verstellbar ist, in der sie den Umluftpfad (12) schließt und den Frischluftpfad (11) öffnet,
- wobei die Steuerklappe (10) wenigstens ein Rückschlagsperrventil (13) aufweist, das in der Frischluftstellung (FL) eine Umluftströmung (14) vom Umlufteinlass (5) durch die Steuerklappe (10) zum Luftauslass (7) zulässt und in der Gegenrichtung sperrt,
- wobei das jeweilige Rückschlagsperrventil (13) ein Ventilglied (15) aufweist, das verstellbar und/oder beweglich an einer dem Luftauslass (7) zugewandten Innenseite (17) der Steuerklappe (10) angeordnet ist und mit einer in der Steuerklappe (10) ausgebildeten Durchlassöffnung (16) zusammenwirkt, um diese in der Durchströmungsrichtung zu öffnen und in der Gegenrichtung zu sperren,
**dadurch gekennzeichnet,**
**dass** das Ventilglied (15) zumindest bereichsweise elastisch ausgestaltet.

2. Klimatisierungsanlage nach Anspruch 1,
**dadurch gekennzeichnet,**
**dass** das Ventilglied (15) in einem stationären Bereich (18) an der Steuerklappe (10) befestigt ist, während ein elastischer mobiler Bereich (20) des Ventilglieds (15) relativ zur Steuerklappe (10) beweglich und/oder verstellbar ist.

3. Klimatisierungsanlage nach einem der Ansprüche 1 bis 2
**dadurch gekennzeichnet,**
**dass** das jeweilige Rückschlagsperrventil (13) druckgesteuert ist und/oder in seine Schließstellung vorgespannt ist, so dass es in der Frischluftstellung FL erst ab einem bestimmten Unterdruck im Frischluftpfad (11) relativ zum Umlufteinlass (5) öffnet.

4. Klimatisierungsanlage nach einem der Ansprüche 1 bis 3
**dadurch gekennzeichnet,**
**dass** die Steuerklappe (10) wannenförmig ausgestaltet ist, wobei eine konkave Innenseite (17) der Steuerklappe (10) dem Luftauslass (7) zugewandt ist.

5. Klimatisierungsanlage nach einem der Ansprüche 1 bis 4
**dadurch gekennzeichnet,**
**dass** die Steuereinrichtung (3) ein Steuergehäuse (4) aufweist, das den Umlufteinlass (5), den Frischlufteinlass (6) und den Luftauslass (7) aufweist, wobei die Steuerklappe (10) in diesem Steuergehäuse (4) um eine Schwenkachse (23) verschwenkbar angeordnet ist.

6. Klimatisierungsanlage nach Anspruch 5
**dadurch gekennzeichnet,**
**dass** die Steuerklappe (10) Dichtkonturen (25) aufweist, die in der Frischluftstellung (FL) und in der Umluftstellung (UL) mit dazu komplementären Gegendichtkonturen (26) zusammenwirken, die am Steuergehäuse (4) ausgebildet sind.

7. Steuereinrichtung für eine Klimatisierungsanlage (1) nach einem der Ansprüche 1 bis 6.

8. Steuerklappe für eine Klimatisierungsanlage (1) nach einem der Ansprüche 1 bis 6 oder für eine Steuereinrichtung (3) nach Anspruch 7.

9. Verwendung einer Steuereinrichtung (3) nach Anspruch 7 oder einer Steuerklappe (10) nach Anspruch 8 in einer Klimatisierungsanlage (1) nach einem der Ansprüche 1 bis 6.

## Claims

1. Air conditioning unit for air conditioning an interior of a vehicle, in particular a passenger vehicle,
- with a fan (2) for driving air,
- with a control device (3), which has a circulating air inlet (5) for suctioning circulating air from the interior, a fresh air inlet (6) for suctioning fresh air from an environment of the vehicle and an air outlet (7) for providing the suctioned circulating air and/or fresh to the fan (2),
- wherein the control device (3) has a control flap (10), which is adjustable between a circulating air position (UL), in which it closes a fresh air path (11) leading from the fresh air inlet (6) to the air outlet (7) and opens a circulating air path (12) leading from the circulating air inlet (5) to the air outlet (7), and a fresh air position (FL), in which it closes the circulating air path (12) and opens the fresh air path (11),
- wherein the control flap (10) has at least one check valve (13) which allows a circulating air flow (14) from the circulating air inlet (5) through the control flap (10) to the air outlet (7) in the fresh air position (FL) and closes in the opposite direction,
- wherein the respective check valve (13) has a valve member (15) which is arranged so as to be adjustable and/or movable on an inner side (17) of the control flap (10) facing the air outlet (7) and cooperates with a passage opening (16) designed in the control flap (10) in order to open in the flow direction and to close in the opposite direction,
**characterised in that**
the valve member (15) is designed elastically at least in regions.

2. Air conditioning unit according to claim 1,
**characterised in that**
the valve member (15) is fastened in a stationary region (18) on the control flap (10), while an elastic mobile region (20) of the valve member (15) is movable and/or adjustable relative to the control flap (10).

3. Air conditioning unit according to any one of claims 1 to 2,
**characterised in that**
the respective check valve (13) is pressure-controlled and/or is pre-tensioned in its closed position such that it is opens in the fresh air position FL only from a certain under pressure in the fresh air path (11) relative to the circulating air inlet (5).

4. Air conditioning unit according to any one of claims 1 to 3,
**characterised in that**
the control flap (10) is trough-shaped, wherein a concave inner side (17) of the control flap (10) is facing the air outlet (7).

5. Air conditioning unit according to any one of claims 1 to 4,
**characterised in that**
the control device (3) has a control housing (4) which has the circulating air inlet (5), the fresh air inlet (6) and the air outlet (7), wherein the control flap (10) is arranged so as to be pivotable about a pivot axis (23) in this control housing (4).

6. Air conditioning unit according to claim 5,
**characterised in that**
the control flap (10) has sealing contours (25) which cooperate in the fresh air position (FL) and in the circulating air position (UL) with counter sealing contours (26) complementary thereto which are designed on the control housing (4).

7. Control device for an air conditioning unit (1) according to any one of claims 1 to 6.

8. Control flap for an air conditioning unit (1) according to any one of claims 1 to 6 or for a control device (3) according to claim 7.

9. Use of a control device (3) according to claim 7 or a control flap (10) according to claim 8 in an air conditioning unit (1) according to any one of claims 1 to 6.

## Revendications

1. installation de climatisation pour la climatisation d'un espace intérieur d'un véhicule, en particulier d'une voiture particulière,
- avec une soufflante (2) pour l'entraînement d'air,
- avec un dispositif de commande (3), qui présente une entrée d'air de circulation (5) pour l'aspiration d'air de circulation de l'espace intérieur, une entrée d'air frais (6) pour l'aspiration d'air frais d'un environnement du véhicule et une sortie d'air (7) pour la transmission de l'air de circulation et/ou de l'air frais aspiré à la soufflante (2),
- dans laquelle le dispositif de commande (3) présente un clapet de commande (10), qui est réglable entre une position d'air de circulation (UL), dans laquelle il ferme une voie d'air frais (11) conduisant de l'entrée d'air frais (6) à la sortie d'air (7) et ouvre une voie d'air de circulation (12) conduisant de l'entrée d'air de circulation (5) à la sortie d'air (7), et une position d'air frais (FL), dans laquelle il ferme la voie d'air de circulation (12) et ouvre la voie d'air frais (11),
- dans laquelle le clapet de commande (10) présente au moins une soupape anti-retour (13), qui autorise dans la position d'air frais (FL) un écoulement d'air de circulation (14) de l'entrée d'air de circulation (5) à la sortie d'air (7) en passant par le clapet de commande (10) et le bloque dans le sens inverse,
- dans laquelle la soupape anti-retour (13) respective présente un élément de soupape (15), qui est agencé de manière réglable et/ou mobile au niveau d'un côté intérieur (17) du clapet de commande (10) tourné vers la sortie d'air (7) et coopère avec une ouverture de passage (16) réalisée dans le clapet de commande (10) pour ouvrir celle-ci dans la direction de passage et la bloquer dans le sens inverse,
**caractérisée en ce**
**que** l'élément de soupape (15) est configuré de manière élastique au moins par zones.

2. Installation de climatisation selon la revendication 1,
**caractérisée en ce**
**que** l'élément de soupape (15) est fixé dans une zone stationnaire (18) au niveau du clapet de commande (10), pendant qu'une zone mobile élastique (20) de l'élément de soupape (15) est mobile et/ou réglable par rapport au clapet de commande (10).

3. Installation de climatisation selon l'une quelconque des revendications 1 à 2
**caractérisée en ce**
**que** la soupape anti-retour (13) respective est commandée par pression et/ou est précontrainte dans sa position de fermeture, si bien qu'elle ne s'ouvre dans la position d'air frais FL qu'à partir d'une dépression donnée dans la voie d'air frais (11) par rapport à l'entrée d'air de circulation (5).

4. installation de climatisation selon l'une quelconque des revendications 1 à 3
**caractérisée en ce**
**que** le clapet de commande (10) est configuré en forme de cuve, dans laquelle un côté intérieur concave (17) du clapet de commande (10) est tourné vers la sortie d'air (7).

5. Installation de climatisation selon l'une quelconque des revendications 1 à 4
**caractérisée en ce**
**que** le dispositif de commande (3) présente un boîtier de commande (4), qui présente l'entrée d'air de circulation (5), l'entrée d'air frais (6) et la sortie d'air (7), dans laquelle le clapet de commande (10) est agencé dans ce boîtier de commande (4) de manière pivotante autour d'un axe de pivotement (23).

6. installation de climatisation selon la revendication 5
**caractérisée en ce**
**que** le clapet de commande (10) présente des contours d'étanchéité (25), qui coopèrent dans la position d'air frais (FL) et dans la position d'air de circulation (UL) avec des contre-contours d'étanchéité complémentaires (26), qui sont réalisés au niveau du boîtier de commande (4).

7. Dispositif de commande pour une installation de climatisation (1) selon l'une quelconque des revendications 1 à 6.

8. Clapet de commande pour une installation de climatisation (1) selon l'une quelconque des revendications 1 à 6 ou pour un dispositif de commande (3) selon la revendication 7.

9. Utilisation d'un dispositif de commande (3) selon la revendication 7 ou d'un clapet de commande (10) selon la revendication 8 dans une installation de climatisation (1) selon l'une quelconque des revendications 1 à 6.
